Europäisches Patentamt

European Patent Office

Office européen des brevets

(11) Publication number: **0 115 670**
**B1**

## (12) EUROPEAN PATENT SPECIFICATION

(45) Date of publication of patent specification: **03.02.88**

(21) Application number: **83306288.8**

(22) Date of filing: **17.10.83**

(51) Int. Cl.⁴: **C 21 D 9/50, B 23 K 31/06**

(54) Method and apparatus for producing welded ferritic stainless steel tubing having improved weld ductility in the as-welded condition.

(30) Priority: **29.12.82 US 454388**

(43) Date of publication of application:
**15.08.84 Bulletin 84/33**

(45) Publication of the grant of the patent:
**03.02.88 Bulletin 88/05**

(84) Designated Contracting States:
**DE FR GB IT SE**

(56) References cited:
**DE-B-2 160 440**
**US-A-2 350 532**
**US-A-4 402 769**

(73) Proprietor: **ALLEGHENY LUDLUM STEEL CORPORATION**
**Oliver Building 2000 Oliver Plaza**
**Pittsburgh Pennsylvania 15222 (US)**

(72) Inventor: **Lovejoy, Paul Theodore**
**173 Greenview Drive**
**Verona Pennsylvania 15147 (US)**
Inventor: **Pepin, James Joseph**
**274 Opening Hill Road**
**Branford Connecticut 06405 (US)**
Inventor: **Hax, Philip Christian**
**2 Steven Street**
**Wallingford Connecticut 06492 (US)**

(74) Representative: **Sheader, Brian N. et al**
**ERIC POTTER & CLARKSON 27 South Street**
**Reading Berkshire, RG1 4QU (GB)**

Courier Press, Leamington Spa, England.

## Description

This invention relates to a method for producing welded stainless steel tubing and more particularly to a post-weld treatment of ferritic stainless steel welded tubing to improve ductility.

It is known that when ferritic stainless steels are cooled more quickly, the steels have lower ductile-brittle transition temperatures (DBTT) which are related to the carbon and nitrogen levels in the steel. In welding such steels, however, the general concern heretofore has been to protect the weld area from carbon, nitrogen and oxygen contamination without regard for the cooling rate.

Welded tubing of ferritic stainless steel having high chromium and molybdenum contents, of the order of 29% and 4%, respectively, are used for applications involving saline and chemical environments in the petrochemical, chemical, desalination, pulp and paper and electrical power generating industries. Because of the relatively high chromium and molybdenum contents, ferritic stainless steel tubing of this type is highly corrosion resistant in these applications and environments.

Conventionally, this tubing is made by autogenous welding. A continuous band of the ferritic stainless steel from which the tubing is to be made is moved longitudinally through roll-forming equipment that roll-forms the moving band of stainless steel into a tubular form having adjacent longitudinal edges. The adjacent edges are longitudinally welded as by the use of a welding torch that conducts an electric current by an ionized inert gas which melts the adjacent edges to produce an autogenous longitudinal weld. Finishing means are then customarily employed to remove or finish to a smooth contour any weld bead resulting from the weld operation. Ferritic stainless steel tubing of this type in the as-welded condition exhibits for most applications the required degree of corrosion resistance because of the relatively high content of chromium and molybdenum. The melting incident to autogenous welding, however, results in a weld zone which is embrittled and which does not in the as-welded condition exhibit the required degree of ductility to permit cold forming to various products typically made from tubing of this type. Consequently, it is customary practice to subject tubing that is to be used for cold fabrication applications to an annealing operation to restore ductility as measured by ductile-brittle transition temperature (DBTT) and to permit the tubing to be cold formed without cracking at the weld-affected area. The annealing temperatures vary depending upon the particular steel alloy, however, generally, the temperature may be about 1600°F (871°C) or more. This annealing operation, which is separate from the tube manufacturing operation described hereinabove, adds considerably to the overall cost of manufacture and is an unnecessary step in the manufacture of the tubing from the standpoint of the desired corrosion-resistant properties, which properties are adequate with the tubing as the as-welded condition.

US Patent 4,402,769 discloses a method for improving the ductility of an autogenous weld in a hot band of straight chromium ferritic stainless steel, welded for the purpose of forming larger coils. This method discloses an additional step of heating the weld area within a temperature range of at least 1200°F (649°C) and in which the steel and weld area are red hot for at least 2 minutes, and thereafter water quenching from that elevated temperature to room temperature. US Patent 2,350,523 discloses a method of welding a hardenable metal using an after-quench nozzle for applying a forced fluid quench upon the weld bead as soon as practical without damaging the bead in order to cool to the desired transformation temperature. The heat effected zone is maintained as nearly as possible at a predetermined transformation temperature with an established heat reservoir, and the method includes the steps of establishing a predetermined transformation temperature, making a weld, and then before the weld is cooled substantially, rapidly withdrawing heat from the weld joint, such as by quenching, to bring the temperature to said predetermined transformation temperature. In the process of this disclosure, it is necessary that the quenching rate be controlled as well as the transition temperature range.

It is accordingly a primary object of the present invention to provide for the manufacture of high-chromium and molybdenum ferritic stainless steel tubing that exhibits a combination of the desired corrosion resistance and ductility, as measured by ductile-brittle transition temperature, in the as-welded condition.

A more specific object of the invention is to provide for the manufacture of ferritic stainless steel tubing of this type wherein incident to the tubing-welded manufacturing sequence an operation is performed that produces the required as-welded ductility in the tubing without resorting to a subsequent, separate annealing operation as is customary practice.

In accordance with the present invention, a method is provided for producing welded ferritic stainless steel tubing having improved weld ductility as in the as-welded condition. The method comprises continuously forming a moving band of ferritic stainless steel into a tube having adjacent longitudinal edges, welding the adjacent edges of the tube to form a longitudinally-welded area between the edges and water quenching the welded area after welding while still in its red-hot condition and continuing quenching of the welded area to room temperature.

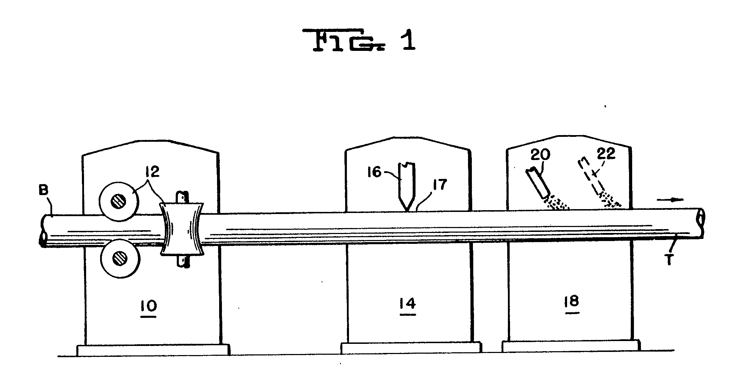

The invention will be more particularly described with reference to the accompanying drawing in which the single Figure is a schematic showing embodiments of apparatus suitable for use in practice of the invention.

Broadly, in the practice of the invention in the conventional manner, a moving band of ferritic stainless steel from which the welded tubing is to be made is continuously moved through roll-forming equipment that forms the band into a tube having adjacent longitudinal edges. The adjacent edges are welded, as by autogenous welding, to form a longitudinal welded area between said edges. In accordance with the improvement of the invention, this welded area is water quenched to room temperature, which water quenching is initiated shortly, with little time delay, after welding when the welded area is still in the red-hot condition at temperatures of at least 1100°F (593.3°C) and quenching is continued to room temperature. To ensure adequate and thorough quenching, it is preferred that the quenching be performed by applying a substantially quiescent layer of water over the welded area. To this end, the apparatus comprises that the means for water quenching be adjacent the welding apparatus. Apparatus preferred for the purpose of water quenching is a nozzle means diurecting a stream of water in the direction of tubing movement and at an angle less than normal (i.e., 90°) to the welded area. The volume of water must be sufficient to provide a film of water over the red-hot weld and a rapid cooling capacity. The time period for such quenching can be very short, and generally is approximately 1 second or less.

Alternatively, an apparatus may include a second nozzle means similarly directing a stream of water, which second nozzle is located downstream of the first nozzle in the direction of tubing movement. In the alternative embodiment, the water from the first nozzle ensures a film of water over the red-hot weld area and the water from the second nozzle provides the cooling power.

The likely mechanism by which the water quenching in accordance with the practice of the invention produces the required ductility in the welded areas is due to the high temperatures incident to the welding operation, for if in the absence of quenching the weld area is permitted to slowly cool in accordance with conventional practice, there results the formation of an embrittling morphology of carbide and nitride particles. If, however, the weld area when red hot is water quenched to room temperature, the effectiveness of this water quench serves to preclude the embrittling mechanism, for example, so as to render the weld area ductile to permit subsequent cold forming without cracking.

With reference to the single Figure of the drawing, there is shown schematically embodiments of apparatus in accordance with the practice of the invention. A band of stainless steel, designated as B, is moved, by means not shown, in the direction of the arrow through a roll forming stand 10 having rolls 12 that serve to form the band into a tube identified as T. The tube formed from the band has longitudinal adjacent edges and these edges are autogenous welded as the band moves through a welding stand 14 having a welding electrode 16 positioned along the path of travel of said adjacent edges to form weldment 17. Immediately downstream of the welding stand 14 and adjacent thereto is a water-quenching apparatus 18. The apparatus 18 has nozzle 20 for directing a stream of water onto the red-hot weld area to provide a substantially quiescent layer of water over the welded area with sufficient cooling power to quench rapidly the weld area to room temperature.

Although the quenching arrangement shown and described herein has proven to be satisfactory for the practice of the invention, it is to be understood that the term "water quenching" as used herein refers to any quenching practice that provides a quench at least as effective as a water quench and that is applied to the welded area while it is red hot and prior to cooling. Any such quenching will be satisfactory for the practice of the invention.

The Figure also illustrates an alternative embodiment wherein the water-quenching apparatus 18 may include a second nozzle 22 (shown in dotted lines) adjacent to nozzle 20 and downstream thereof in the direction of movement of tube T. In such an arrangement, nozzle 20 directs a stream of water onto the red-hot weld area to provide the substantially quiescent layer or film of water and nozzle 22 directs a second stream or spray of water onto the weld area to provide further cooling capacity to rapidly quench the weld area to room temperature.

In order to more completely understand the present invention, the following Example is presented:

## 0 115 670

Example

Samples of welded ferritic stainless steel tubing having 0.875 inch (2.22 cm) diameter and 0.028 inch (0.071 cm) wall thickness were produced having a nominal composition of:

| | |
|---|---|
| chromium | 29.00 |
| molybdenum | 4.00 |
| nickel | 0.30 |
| manganese | 0.50 |
| phosphorus | 0.03 |
| sulfur | 0.01 |
| silicon | 0.35 |
| carbon | 0.02 |
| nitrogen | 0.02 |
| titanium | 0.50 |

Hammer Impact Flare Tests were performed on 20 samples of tubing produced at each of four conditions and tested at room temperature (about 70°F or 21.1°C) and 32°F (0°C). The Flre tests generally provided for a hammering impact of the end of a tube while on a flaring cone. The results of the tests are shown in the following Table.

### Hammer Impact Flare Tests

| Tube Condition | Room Temperature Tests (Number of Samples) | | | Tests at 32°F (0°C) (Number of Samples) | | |
|---|---|---|---|---|---|---|
| | Tested | Passed | Failed | Tested | Passed | Failed |
| As Welded | 20 | 0 | 20 | 20 | 0 | 20 |
| As Welded + WQ | 20 | 19 | 1 | 20 | 17 | 3 |
| Bright Anneal | 20 | 14 | 6 | 20 | 10 | 10 |
| Lab Anneal + WQ | 20 | 20 | 0 | 20 | 18 | 2 |

The abbreviation WQ means the samples were water quenched. The annealing temperatures for some samples were of about 1800°F (982°C). The samples were visually examined and were considered to have failed if the flared tubing exhibited any cracks or splits in the base metal or weldment.

The specific example particularly demonstrates that the ductility, as measured by the ductile-to-brittle transition temperature of welded ferritic tubing of the nominal composition, is adequate to permit typical cold-forming operations without weld cracking when quenched after welding in accordance with the invention and is comparable to tubing of similar composition that has been subjected to a post-welding annealing practice as conventionally used prior to this invention.

**Claims**

11. A method for producing welded ferritic stainless steel tubing having improved weld ductility in the as-welded condition, said method comprising continuously forming a moving band (B) of ferritic stainless steel into a tube (T) having adjacent longitudinal edges and welding said adjacent edges of said tube (T) to form a longitudinal welded area between said edges characterised by water quenching said welded area after welding while still in its red-hot condition and continuing quenching of said welded area to room temperature.

2. A method according to claim 1, characterised in that said water quenching is performed by applying a substantially quiescent layer of water over said welded area.

4

**Patentansprüche**

1. Verfahren zur Herstellung von geschweißten Rohren aus nichtrostendem ferritischem Stahl, die ein verbessertes Formänderungsvermögen im Schweißnahtbereich aufweisen, bei dem ein laufendes Band (B) aus nichtrostendem ferritischem Stahl zu einem Rohr (T), dessen Längskanten aneinandergrenzen, kontinuierlich geformt wird, und diese Längskanten werden danach verschweißt, um einen geschweißten Längsbereich zwischen denselben zu bilden, dadurch gekennzeichnet, daß dieser geschweißte Längsbereich nach dem Schweißem mittels Wasser abgeschreckt wird, während er noch im rotglühenden Zustand ist, und daß dieser Wasserabschreckvorgang fortgesetzt wird, bis die Temperatur des geschweißten Längsbereiches die Umgebungstemperatur erreicht.

2. Verfahren nach Anspruch 1, dadurch gekennzeichnet, daß eine im wesentlichen stille Wasserdecke auf den geschweißtem Längsbereich aufgetragen wird, um den Wasserabschreckvorgang durchzuführen.

**Revendications**

1. Procédé pour la production de tubes soudés en acier ferritique inoxydable avec ductilité de soudure améliorée à l'état soudé, dans lequel une bande roulante d'acier ferritique inoxydable (B) est mise sous forme de tube (T), en continu, et les bords longitudinaux de ce tube (T), qui sont voisins l'un de l'autre, sont soudés, afin de créer une zone longitudinale soudés entre eux, caractérisé en ce que, après soudée, cette zone longitudinale soudée est trempée à l'eau pendant qu'elle est encore chauffée au rouge, et en ce que cette trempe est poursuite jusqu'à ce que la température de cette zone soudée atteigne la température ambiante.

2. Procédé selon la revendication 1, caractérisé en ce que la trempe à l'eau est réalisée par l'application d'une couche d'eau essentiellement tranquille sur la zone longitudinale soudée.

0 115 670

# FIG. 1